# EUROPÄISCHE PATENTSCHRIFT

(11) **EP 0 427 082 B1**
(45) Veröffentlichungstag und Bekanntmachung des Hinweises auf die Patenterteilung: **12.01.1994**
(21) Anmeldenummer: 90120745.6
(22) Anmeldetag: 29.10.1990
(51) Int. Cl.: G01D 15/16, G01D 15/22

(54) **Mehrfarbenschreibeinrichtung für ein elektrisches Registriergerät**
Multi-colour printer for an electrical recording instrument
Imprimante à plusieurs couleurs pour un instrument d'enregistrement électrique

(30) Priorität: 09.11.1989 DE 8913277 U
(43) Veröffentlichungstag der Anmeldung: 15.05.1991
(73) Patentinhaber: SIEMENS AKTIENGESELLSCHAFT, 80333 München (DE)
(72) Erfinder: Huth, Leif, W-7506 Bad Herrenalb 3 (DE); Pfitzner, Ulrich, W-7500 Karlsruhe 21 (DE)

(56) Entgegenhaltungen:
- EP-A- 0 124 116
- DE-U- 8 714 305
- US-A- 1 459 087
- US-A- 4 757 330

## Beschreibung

Die Erfindung bezieht sich auf eine Mehrfarbenschreibeinrichtung für ein elektrisches Registriergerät, bestehend aus einem auf mindestens einer Schiene parallel zur Schreibebene verschiebbaren Schreibwagen mit einem Schrittmotor zum Antrieb eines um eine Achse drehbaren, mehrere parallel dazu angeordnete Tintenkammern und daran angeschlossene Schreibspitzen enthaltenden, auswechselbaren Magazins, an dessen rückwärtigen Ende eine Abschlußscheibe mit einer der Anzahl der Tintenkammern entsprechenden Zahl von Raststufen angebracht ist, wie es aus EP-A-0 124 116 bekannt ist.

Ferner ist in DE-U 8 714 305 eine Mehrfarbenschreibeinrichtung beschrieben, die ebenfalls ein um eine Achse drehbares, auswechselbares Magazin aufweist, das mehrere parallel dazu angeordnete Tintenkammern und daran angeschlossene Schreibspitzen enthält. Die Schreibspitzen sind vertikal bewegbar.

Bei einem registrierenden Meßgerät, das sowohl als Punktdrucker als auch als Linienschreiber eingesetzt werden soll, müssen sowohl der Wechsel der Tintenfarbe gemäß der jeweiligen Meßgröße als auch das Auf- und Absetzen der Schreibspitzen auf den Aufzeichnungsträger bewerkstelligt werden. Bisher wurden die beiden Bewegungsabläufe für Farbwechsel und Betätigung der Schreibspitzen mit zwei Stellgliedern ausgeführt, die mechanisch, z. B. mit Zwangssteuerung über ein Getriebe, elektromechanish mit Hilfe von Hubmagneten oder motorish mit Hilfe von Gleichspannungs-, Synchron- oder Schrittmotoren ausgeführt waren.

Es besteht die Aufgabe, eine Mehrfarbenschreibeinrichtung so auszubilden, daß die genannten Funktionen mit einem einzigen Stellglied, nämlich einem Schrittmotor, der in beiden Richtungen betreibbar ist, durchgeführt werden können.

Eine Lösung der Aufgabe wird in einer Schreibeinrichtung der eingangs genannten Art gesehen, welche die Merkmale des Anspruchs aufweist.
Durch entsprechende Vorgabe der Schrittzahl des Antriebsmotors in der einen oder anderen Richtung lassen sich die Bewegungsabläufe vorgenannten Funktionen nach Belieben durchführen.

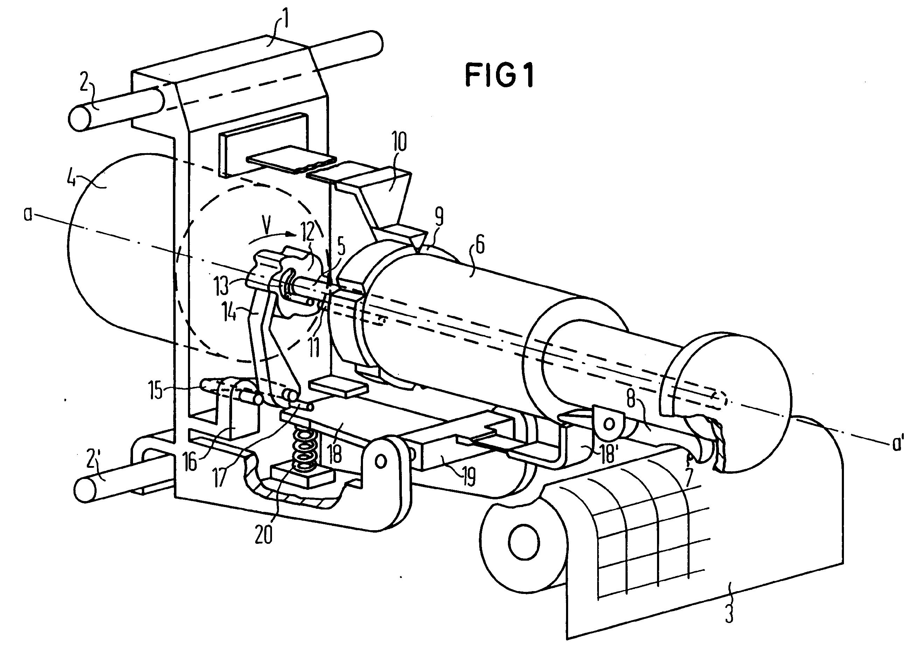

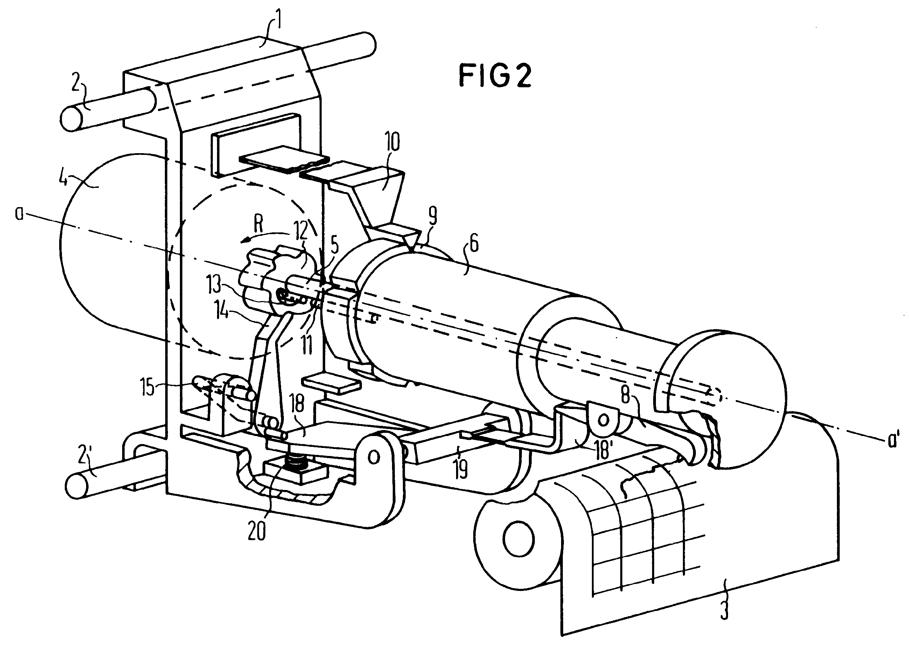

Zur Erläuterung der Erfindung ist in den Figuren 1 und 2 ein Ausführungsbeispiel dargestellt und im folgenden beschrieben.

Ein Schreibwagen 1 ist mit Hilfe einer hier nicht dargestellten Verstelleinrichtung auf Schienen 2, 2' parallel zur Schreibebene des Aufzeichnungsträger 3 meßwertabhängig bewegbar. Auf der Rückseite der senkrechten Wand des Schreibwagens 1 ist ein in beiden Drehrichtungen betreibbarer Schrittmotor 4 angeordnet, dessen Motorwelle 5 bzw. deren Verlängerung als Achse für ein lose aufsteckbares Magazin 6 dient, welches mehrere achsparallel angeordnete Tintenkammern für verschiedenfarbige Tinten und eine jeder Tintenkammer zugeordnete Schreibspitze 7 enthält, welche am vorderen Ende eines vertikal bewegbaren, zweiarmigen Betätigungshebels 8 angebracht ist.

Das rückwärtige Ende des im wesentlichen zylindrisch ausgebildeten Magazins 6 weist eine Abschlußscheibe 9 auf, welche auf ihrem Umfang mit mehreren der Anzahl der Tintenkammern entsprechenden Rastkerben versehen ist, mit welchen ein federnd am Schreibwagen 1 gelagerter Rastarm 10 zusammenwirkt. In der Abschlußscheibe 9 ist parallel zur Mittelachse a-a' ein nach rückwärts ragender Mitnehmerstift 11 angeordnet.

Die Motorwelle 5 trägt ein Klinkenrad 12 mit einer der Anzahl der Tintenkammern in dem Magazin 6 entsprechenden Zahl von Klinken. Es ist mit einer parallel zu seinem Umfang verlaufenden, bogenförmigen Ausnehmung 13 versehen, in welche der Mitnehmerstift 11 eingreift.
Der Zentriwinkel der bogenförmigen Ausnehmung 13 ist größer als der zweier benachbarter Klinken und schließt diesen ein.

Der mit dem Klinkenrad 12 zusammenwirkende Klinkenhebel 14 ist mit seinem einen Ende auf dem einen Schenkel eines U-förmigen Gelenkstücks 15 befestigt, dessen anderer Schenkel drehbar in einem Lagerbock 16 am Schreibwagen 1 gelagert ist. Ein am unteren Ende des Klinkenhebels 14 angebrachter Zapfen 17 steht in kraftschlüssiger Verbindung mit dem unter dem Druck einer Feder 20 stehenden rückwärtigen Ende 18 einer Wippe 19, die unterhalb des Magazins 6 gelagert ist und deren vorderes Ende 18' in Wirkverbindung mit dem Betätigungshebel 8 für die jeweils in der unteren Stellung befindliche Schreibspitze 7 steht. In der gezeichneten Stellung steht die Schreibspitze 7 nicht in Kontakt mit dem Aufzeichnungsträger 3.

Um die Tintenfarbe zu wechseln, dreht in einer ersten Bewegungssequenz der Schrittmotor 4 in Uhrzeigerrichtung V um eine Anzahl A von Winkelschritten, beispielsweise 15 oder ein ganzzahliges Mehrfaches davon, bis die Tintenkammer mit der gewünschten Farbe in der unteren Lage ist. Dabei liegt der Mitnehmerstift 11 am linken Anschlag der Ausnehmung 13. Der Rastarm 10 hält das Magazin in der neuen Lage fest. Dreht der Schrittmotor 4 in einer zweiten Bewegungssequenz, deren Schrittzahl B kleiner ist als die Schrittzahl A, entgegen dem Uhrzeigersinn in Richtung R, so wird, wie Figur 2 zeigt, der Klinkenhebel 14 durch die Klinke, hinter welcher er eingerastet ist, gegen die Kraft der Feder 20 um das U-förmige Gelenkstück 15 schwenkend heruntergedrückt, der Zapfen 17 betätigt die Wippe 19 und diese bringt über den Betätigungshebel 8 die Schreibspitze 7 in Schreibkontakt mit dem Aufzeichnungsträger 3. Mit einer dritten Bewegungssequenz in Richtung V, deren Schrittzahl C kleiner oder vor einem mit der Schrittzahl A zu bewirkenden Farbwechsel gleich der Schrittzahl B ist, kann die Schreibspitze wieder abgehoben und durch eine folgende vierte Bewegungssequenz in Richtung R erneut in Schreibstellung abgesenkt werden. Die dritten und vierten Bewegungssequenzen können beliebig oft wiederholt werden, so daß sowohl Punkte, Linien als auch alphanumerische Zeichen geschrieben werden können.

Da der Zentriwinkel der Ausnehmung 13 größer ist als der zwischen zwei benachbarten Klinken des Klinkenrads 12, wird während aller Bewegungssequenzen, deren Schrittzahl kleiner ist als die der ersten Bewegungssequenz, das Magazin nicht gedreht, da zwischen dem Mitnehmerstift 11 und den Anschlägen an den Enden der Ausnehmung 13 kein Formschluß besteht.

## Patentansprüche

1. Mehrfarbenschreibeinrichtung für ein elektrisches Registriergerät, bestehend aus einem auf mindestens einer Schiene parallel zur Schreibebene verschiebbaren Schreibwagen mit einem Schrittmotor zum Antrieb eines um eine Achse drehbaren, mehrere parallel dazu angeordnete Tintenkammern und daran angeschlossene Schreibspitzen enthaltenden, auswechselbaren Magazins, an dessen rückwärtigen Ende eine Abschlußscheibe mit einer der Anzahl der Tintenkammern entsprechenden Zahl von Raststufen angebracht ist, **gekennzeichnet durch** :
a) auf dem Umfang der Abschlußscheibe (9) angebrachte Rastkerben in einer der Anzahl der Tintenkammern entsprechenden Zahl;
b) ein in der Abschlußscheibe (9) angebrachter, parallel zur Mittelachse (a-a') nach rückwärts ragender Mitnehmerstift (11);
c) einen mit den Rastkerben im Umfang der Abschlußscheibe (9) zusammenwirkenden, am Schreibwagen befestigten, federnden Rastarm (10);
d) ein vom in beiden Drehrichtungen betreibbaren Schrittmotor (4) angetriebenes Klinkenrad (12) mit der Anzahl der Tintenkammern entsprechenden Zahl von Klinken und mit einer parallel zu seinem Umfang verlaufenden, bogenförmigen Ausnehmung (13) als Eingriff für den Mitnehmerstift (11), wobei der Zentriwinkel der bogenförmigen Ausnehmung (13) größer ist als der eingeschlossene Zentriwinkel zweier benachbarter Klinken;
e) einen mit dem Klinkenrad (12) zusammenwirkenden Klinkenhebel (14);
f) ein U-förmiges Gelenkstück (15) mit parallel zur Mittelachse (a-a') des Magazins (6) verlaufenden Schenkeln, auf dessen einem Schenkel der Klinkenhebel (14) befestigt ist und dessen anderer Schenkel drehbar in einem Lagerbock (16) des Schreibwagens (1) gelagert ist;
g) eine Wippe (19), die unterhalb des Magazins (6) um eine senkrecht zur Mittelachse (a-a') verlaufende Achse drehbar gelagert ist, deren vorderes Ende (18') auf einem Betätigungshebel (8) der vertikal beweglichen Schreibspitze (7) wirkt und deren rückwärtiges Ende (18) mit Hilfe einer darauf wirkenden Feder (20) mit dem unteren Ende des Klinkenhebels (14) in kraftschlüssiger Verbindung steht.

## Claims

1. Multi-colour writing device for an electrical recording instrument, consisting of a writing carriage, which can be displaced on at least one rail parallel to the writing plane, having a stepping motor to drive a replaceable magazine which is rotatable about an axis and which contains several ink chambers arranged parallel thereto and writing styluses connected thereto, and installed on the rear end of which magazine there is a cover disc with a number of stop stages corresponding to the quantity of ink chambers, characterised by
a) stop notches provided on the periphery of the cover disc (9) in a number corresponding to the quantity of ink chambers;
b) a carrier pin (11) which is provided in the cover disc (9) and which projects towards the rear thereof, parallel to the central axis (a-a');
c) a resilient stop arm (10) which cooperates with the stop notches in the periphery of the cover disc (9) and is secured to the writing carriage;
d) a ratchet wheel (12) which is driven by the stepping motor (4), operable in both directions of rotation, the wheel having a number of ratchets corresponding to the quantity of ink chambers and having a curved recess (13) which extends parallel to the wheel's periphery as a means of engagement for the carrier pin (11), with the curved recess (13) extending over a greater angle than the angle between two adjacent ratchets;
e) a ratchet lever (14) which cooperates with the ratchet wheel (12);
f) a U-shaped articulation piece (15) with limbs extending parallel to the central axis (a-a') of the magazine (6), to one limb of which piece (15) the ratchet lever (14) is secured and the other limb of which piece (15) is rotatably mounted in a bearing block (16) of the writing carriage (1);
g) a rocker (19) which is rotatably mounted below the magazine (6) about an axis extending so as to be perpendicular to the central axis (a-a') and the front end (18') of which rocker acts on an actuating lever (8) of the vertically movable writing stylus (7) and the rear end (18) of which rocker, with the aid of a spring (20) acting thereon, is frictionally connected with the lower end of the ratchet lever (14).

## Revendications

1. Dispositif d'enregistrement polychrome pour un appareil électrique d'enregistrement constitué par un chariot d'enregistrement déplaçable sur au moins un rail parallèlement au plan d'enregistrement et comportant un moteur pas-à-pas servant à entraîner un magasin remplaçable, qui peut être entraîné en rotation autour d'un axe et contient plusieurs réservoirs d'encre disposés parallèlement à cet axe et des stylets inscripteurs qui sont racccordés à ces réservoirs et sur l'extrémité arrière duquel est monté un disque de fermeture comportant un nombre d'étages d'encliquetage, qui correspond au nombre des réservoirs d'encre, caractérisé par :
a) des encoches d'encliquetage disposées sur la périphérie du disque de fermeture (9) et présentes en un nombre qui correspond au nombre des réservoirs d'encre;
b) une tige d'entraînement (11) qui est montée sur le disque de fermeture (9) et fait saillie vers l'arrière parallèlement à l'axe médian (a-a');
c) un bras d'encliquetage élastique (10), qui coopère avec les encoches d'encliquetage sur la périphérie du disque de fermeture (9) et est fixé sur le chariot d'inscription;
d) une roue à rochet (12), qui est entraînée par le moteur pas-à-pas (4), qui peut tourner dans les deux sens de rotation, et comporte un nombre de cliquets, qui correspond au nombre des réservoirs d'encre, et un évidement en forme d'arc (13), qui s'étend parallèlement à la périphérie, en tant que partie d'accrochage pour la tige d'entraînement (11), l'angle au centre de l'évidement en forme d'arc (13) étant supérieur à l'angle au centre délimité par deux cliquets voisins;
e) un levier à cliquet (14) qui coopère avec la roue à rochet (12);
f) une pièce articulée en forme de U (15) qui possède des branches qui s'étendent parallèlement à l'axe médian (a-a') du magasin (6) et sur l'une desquelles est fixé le levier à cliquet (14), et dont l'autre est montée rotative dans un palier (16) du chariot d'inscription (1);
g) un élément basculant (19), qui est monté au-dessous du magasin (6) de manière à pouvoir pivoter autour d'un axe perpendiculaire à l'axe médian (a-a') et dont l'extrémité avant (18') agit sur un levier d'actionnement (8) du stylet inscripteur (7) mobile verticalement et dont l'extrémité arrière (18) est raccordée selon une liaison de force, au moyen d'un ressort (20) agissant sur cette extrémité, à l'extrémité inférieure du levier à cliquet (14).
